# EUROPEAN PATENT APPLICATION

(11) **EP 3 482 870 A1**
(43) Date of publication of application: **15.05.2019**
(21) Application number: 18205016.1
(22) Date of filing: 07.11.2018
(51) Int. Cl.: B23P 15/16, B21D 31/02, B41J 2/16

(54) **METHOD FOR MANUFACTURING JET HOLE PLATE**

(30) Priority: 14.11.2017 JP 2017218698
(71) Applicant: SII Printek Inc, Chiba-shi Chiba 261-8507 (JP)
(72) Inventor: OSAKA, Emiko, Chiba-shi, Chiba 261-8507 (JP); HIRATA, Masakazu, Chiba-shi, Chiba 261-8507 (JP); YAMAMOTO, Shutaro, Chiba-shi, Chiba 261-8507 (JP); TAKANO, Kenji, Chiba-shi, Chiba 261-8507 (JP); HITOMI, Takashi, Chiba-shi, Chiba 261-8507 (JP)
(74) Representative: Miller Sturt Kenyon

(57) **Abstract**

Provided herein is a method for manufacturing a jet hole plate that can improve ejection stability and head durability. A method for manufacturing a jet hole plate according to an embodiment of the present disclosure includes: a punching step (S101) of pressing a first principal surface (100A) of a metal substrate with a punch (200) to form an indentation (100C) in the first principal surface, and to form a raised portion (100D) in a second principal surface (100B) of the metal substrate at a position opposite to the indentation; a first polishing step (S102) of removing the raised portion by mechanical polishing to penetrate the metal substrate at the indentation to thereby form a jet hole; and a second polishing step (S103) of polishing at least one of the first principal surface and the second principal surface of the metal substrate by chemical polishing, electrolytic polishing, or chemical-mechanical polishing.

## Description

### BACKGROUND OF THE INVENTION

### 1. Field of the Invention

The present disclosure relates to a method for manufacturing a jet hole plate.

### 2. Background Art

A liquid jet recording apparatus equipped with a liquid jet head is in wide use.

A liquid jet head includes a plurality of laminated plates including a jet hole plate having formed therein large numbers of jet holes, and is configured to eject liquid, specifically, ink, against a target recording medium through the jet holes. Such a jet hole plate is formed by, for example, press working of a metal substrate (see, for example, Japanese Patent No. 4935535).

### SUMMARY OF THE INVENTION

There is a common demand for a jet hole plate having improved ejection stability, and improved head durability. It is accordingly desirable to provide a method for manufacturing a jet hole plate that can achieve improved ejection stability, and improved head durability

A method for manufacturing a jet hole plate according to an embodiment of the present disclosure includes:
(A) a punching step of pressing a first principal surface of a metal substrate with a punch to form an indentation in the first principal surface, and to form a raised portion in a second principal surface of the metal substrate at a position opposite to the indentation;
(B) a first polishing step of removing the raised portion by mechanical polishing to penetrate the metal substrate at the indentation to thereby form a jet hole; and
(C) a second polishing step of polishing at least one of the first principal surface and the second principal surface of the metal substrate by chemical polishing, electrolytic polishing, or chemical-mechanical polishing.

The method for manufacturing a jet hole plate according to the aspect of the present disclosure can improve ejection stability and head durability.

### BRIEF DESCRIPTION OF THE DRAWINGS

Embodiments of the present invention will now be described by way of further example only and with reference to the accompanying drawings, in which:
FIG. 1 is a perspective view schematically representing an example of a structure of a liquid jet recording apparatus according to an embodiment of the present disclosure.
FIG. 2 schematically represents an exemplary detailed structure of a circulation mechanism and other members shown in FIG. 1.
FIG. 3 is an exploded perspective view representing an exemplary structure of a liquid jet head of FIG. 2 in detail.
FIG. 4 schematically shows a bottom view of the exemplary structure of the liquid jet head, without a nozzle plate shown in FIG. 3.
FIG. 5 is a schematic diagram showing a partial cross section of the exemplary structure of the liquid jet head of FIG. 3 at line V-V of FIG. 4.
FIG. 6 is a schematic diagram showing a partial cross section of an exemplary structure of the nozzle plate shown in FIG. 5.
FIG. 7 is a schematic diagram showing a partial cross section of the exemplary structure of the nozzle plate shown in FIG. 5.
FIG. 8 is a diagram representing an exemplary procedure of manufacturing the nozzle plate of an embodiment.
FIG. 9A is a cross sectional view representing an example of a manufacturing step of the nozzle plate according to an embodiment.
FIG. 9B is a cross sectional view representing an example of a manufacturing step after FIG. 9A.
FIG. 9C is a cross sectional view representing an example of a manufacturing step after FIG. 9B.
FIG. 9D is a cross sectional view representing an example of a manufacturing step after FIG. 9C.
FIG. 9E is a cross sectional view representing an example of the metal substrate after the polishing in FIG. 9C or 9D.
FIG. 9F is a cross sectional view representing an example of a manufacturing step after FIG. 9C or 9D.
FIG. 9G is a cross sectional view representing an example of a manufacturing step after FIG. 9C or 9D.
FIG. 9H is a cross sectional view representing an example of a manufacturing step after FIG. 9C or 9D.

### DESCRIPTION OF THE PREFERRED EMBODIMENT

An embodiment of the present disclosure is described below, with reference to the accompanying drawings. Descriptions are given in the following order.
1. Embodiment (Method of Manufacture of Nozzle Plate)
2. Variations

### 1. Embodiment

### Overall Configuration of Printer 1

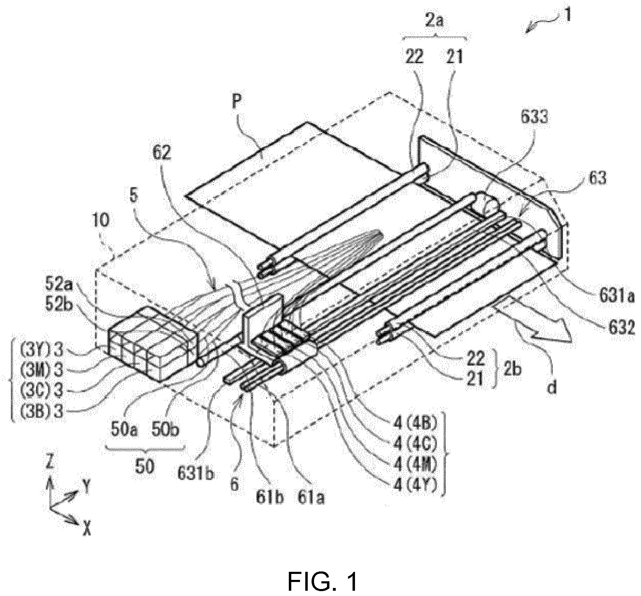

FIG. 1 is a perspective view schematically representing an example of a structure of a printer 1 as a liquid jet recording apparatus according to an embodiment of the present disclosure. The printer 1 is an inkjet printer that records (prints) an image, texts, and the like on recording paper P (target recording medium), using an ink 9 (described later). The printer 1 is also an ink-circulating inkjet printer that circulates the ink 9 through a predetermined channel, as will be described later in detail.

As illustrated in FIG. 1, the printer 1 includes a pair of transport mechanisms 2a and 2b, ink tanks 3, inkjet heads 4, a circulation mechanism 5, and a scan mechanism 6. These members are housed in a housing 10 of a predetermined shape. The drawings referred to in the descriptions of the specification are appropriately scaled to show members in sizes that are easily recognizable.

### Transport Mechanisms 2a and 2b

The transport mechanisms 2a and 2b, as shown in FIG. 1, are mechanisms that transport recording paper P along a transport direction d (X-axis direction). The transport mechanisms 2a and 2b each include a grid roller 21, a pinch roller 22, and a drive mechanism (not illustrated). The grid rollers 21 and the pinch rollers 22 extend along the Y-axis direction (width direction of recording paper P). The drive mechanisms rotate the grid rollers 21 about the roller axis (within a Z-X plane), and are configured by using, for example, a motor.

### Ink Tanks 3

The ink tanks 3 are storages for the ink 9. In this example, as shown in FIG. 1, the ink tanks 3 are four separate tanks storing the inks 9 of four different colors: yellow (Y), magenta (M), cyan (C), and black (B). Specifically, the ink tanks 3 are an ink tank 3Y storing a yellow ink 9, an ink tank 3M storing a magenta ink 9, an ink tank 3C storing a cyan ink 9, and an ink tank 3B storing a black ink 9. The ink tanks 3Y, 3M, 3C, and 3B are disposed side by side in the housing 10 along X-axis direction. The ink tanks 3Y, 3M, 3C, and 3B have the same configuration, except for the color of the ink 9 stored therein, and accordingly will be collectively referred to as ink tank 3.

### Inkjet Heads 4

The inkjet heads 4 record an image, texts, and the like by jetting (ejecting) the ink 9 against recording paper P in the form of droplets through a plurality of nozzle holes (nozzle holes H1 and H2; described later). In this example, as shown in FIG. 1, the inkjet heads 4 are four separate inkjet heads that jet the inks 9 of four different colors stored in the ink tanks 3Y, 3M, 3C, and 3B. That is, the inkjet heads 4 are an inkjet head 4Y for jetting the yellow ink 9, an inkjet head 4M for jetting the magenta ink 9, an inkjet head 4C for jetting the cyan ink 9, and an inkjet head 4B for jetting the black ink 9. The inkjet heads 4Y, 4M, 4C, and 4B are disposed side by side in the housing 10 along Y-axis direction.

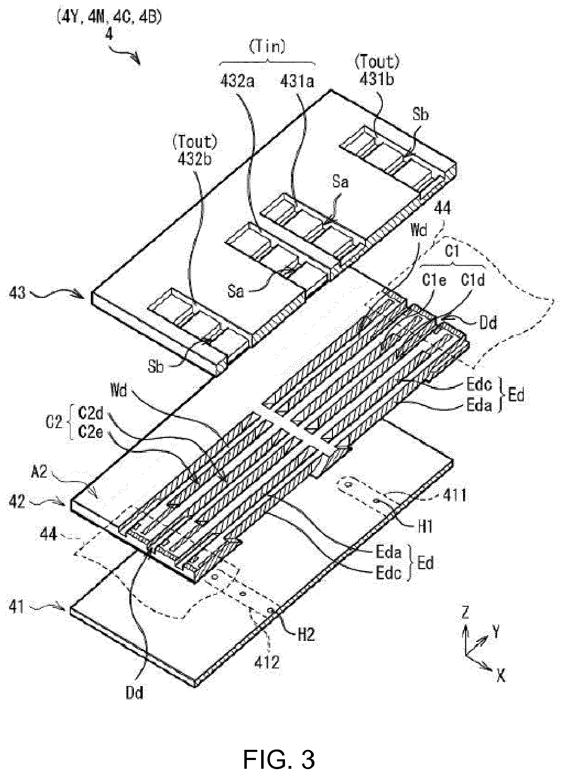

The inkjet heads 4Y, 4M, 4C, and 4B have the same configuration, except for the color of the ink 9 to be used, and accordingly will be collectively referred to as inkjet head 4. The configuration of the inkjet heads 4 will be described later in greater detail (FIGS. 3 to 5).

### Circulation Mechanism 5

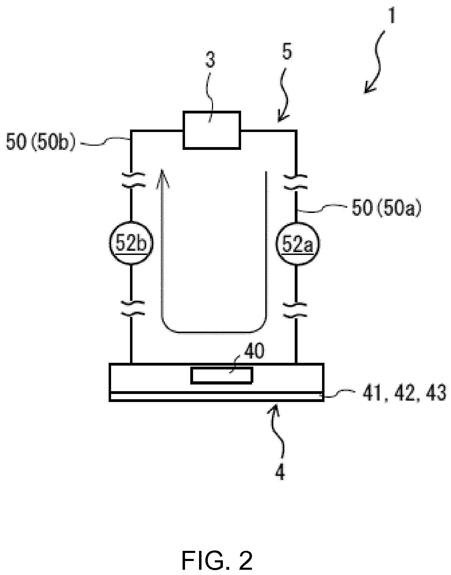

The circulation mechanism 5 is a mechanism for circulating the ink 9 between the ink tank 3 and the inkjet head 4. FIG. 2 schematically represents an exemplary structure of the circulation mechanism 5, together with the ink tank 3 and the inkjet head 4. The solid arrow in FIG. 2 indicates the direction of circulation of the ink 9. As shown in FIG. 2, the circulation mechanism 5 includes a predetermined channel (circulation channel 50), and a pair of delivery pumps 52a and 52b for circulating the ink 9.

The circulation channel 50 is a channel through which the ink 9 circulates between the inkjet head 4 and outside of the inkjet head 4 (inside the ink tank 3). The circulation channel 50 has a channel 50a that connects the ink tank 3 to the inkjet head 4, and a channel 50b that connects the inkjet head 4 to the ink tank 3. In other words, the channel 50a represents a channel through which the ink 9 travels from the ink tank 3 to the inkjet head 4, and the channel 50b is a channel through which the ink 9 travels from the inkjet head 4 to the ink tank 3.

The delivery pump 52a is disposed between the ink tank 3 and the inkjet head 4 on the channel 50a. The delivery pump 52a is a pump for delivering the stored ink 9 in the ink tank 3 to the inkjet head 4 via the channel 50a. The delivery pump 52b is disposed between the inkjet head 4 and the ink tank 3 on the channel 50b. The delivery pump 52b is a pump for delivering the stored ink 9 in the inkjet head 4 to the ink tank 3 through the channel 50b.

### Scan Mechanism 6

The scan mechanism 6 is a mechanism for scanning the inkjet head 4 along the width direction (Y-axis direction) of recording paper P. As illustrated in FIG. 1, the scan mechanism 6 includes a pair of guide rails 61a and 61b extending along the Y-axis direction, a carriage 62 movably supported on the guide rails 61a and 61b, and a drive mechanism 63 for moving the carriage 62 along the Y-axis direction. The drive mechanism 63 includes a pair of pulleys 631a and 631b disposed between the guide rails 61a and 61b, an endless belt 632 suspended between the pulleys 631a and 631b, and a drive motor 633 for driving and rotating the pulley 631a.

The pulleys 631a and 631b are disposed in regions corresponding to the vicinity of end portions of the guide rails 61a and 61b, respectively, along the Y-axis direction. The carriage 62 is joined to the endless belt 632. The four inkjet heads 4Y, 4M, 4C, and 4B are disposed side by side on the carriage 62, along the Y-axis direction. The scan mechanism 6, together with the transport mechanisms 2a and 2b, constitutes a moving mechanism for moving the inkjet heads 4 and the recording paper P relative to each other.

### Detailed Configuration of Inkjet Head 4

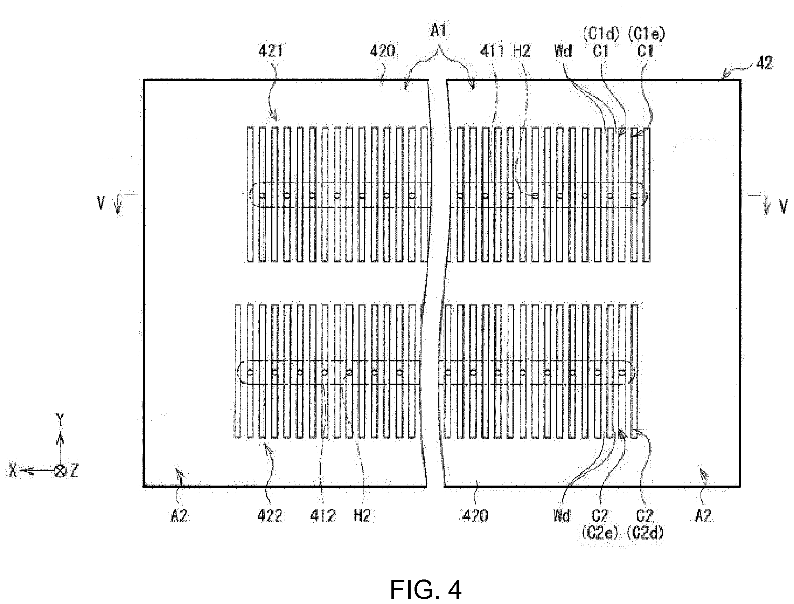

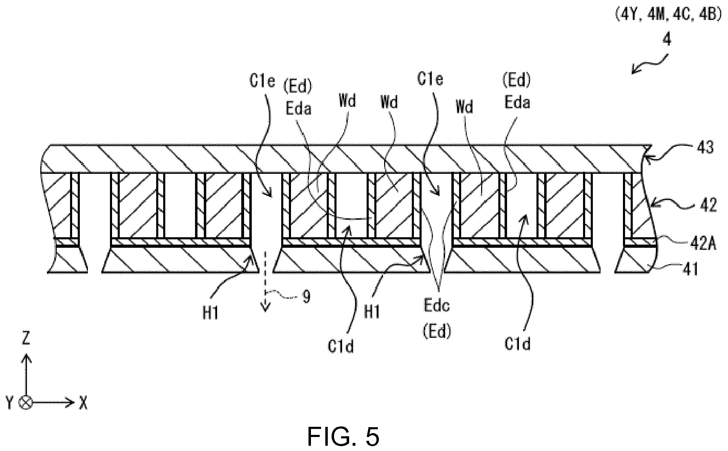

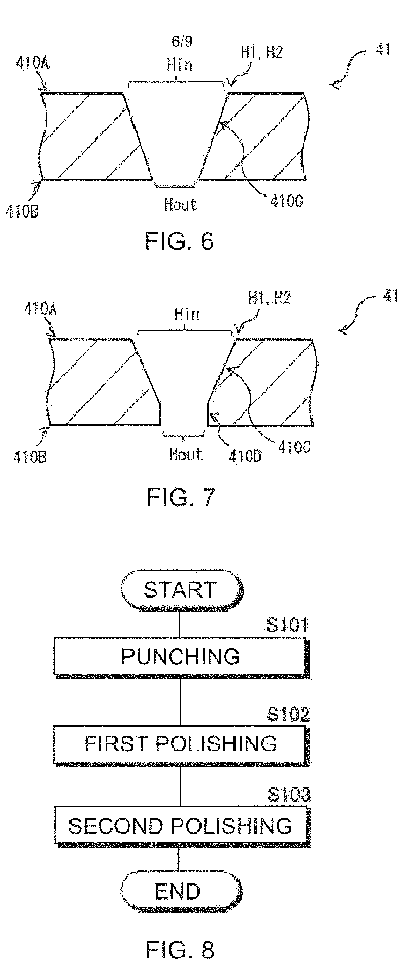

The following specifically describes an exemplary structure of the inkjet head 4, with reference to FIGS. 1 and 2, and FIGS. 3 to 5. FIG. 3 is an exploded perspective view showing an exemplary structure of the inkjet head 4 in detail. FIG. 4 schematically shows a bottom view (X-Y bottom view) of the exemplary structure of the inkjet head 4, without a nozzle plate 41 (described later) shown in FIG. 3. FIG. 5 is a schematic diagram showing a partial cross section (Z-X cross section) of the exemplary structure of the inkjet heads 4 taken at line V-V of FIG. 4. FIGS. 6 and 7 are schematic diagrams showing a partial cross section of the exemplary structure (Y-Z cross section exemplary structure) of the nozzle plate 41.

The inkjet head 4 of the present embodiment is what is generally called a side shoot-type inkjet head, and ejects the ink 9 from a central portion in the direction of extension (Y-axis direction) of a plurality of channels (channels C1 and C2; described later). The inkjet head 4 is also a circulatory inkjet head, allowing the ink 9 to circulate to and from the ink tank 3 to be used with the use of the circulation mechanism 5 (circulation channel 50).

As illustrated in FIG. 3, the inkjet head 4 mainly includes the nozzle plate (jet hole plate) 41, an actuator plate 42, and a cover plate 43. The nozzle plate 41, the actuator plate 42, and the cover plate 43 are bonded to each other using, for example, an adhesive, and are laminated in Z-axis direction, in this order. In the following, the "top" of the inkjet head 4 is on the side of the cover plate 43, and the "bottom" of the inkjet head 4 is on the side the nozzle plate 41, relative to Z-axis direction.

### Nozzle Plate 41

The nozzle plate 41 is a plate used for the inkjet head 4. The nozzle plate 41 has a metal substrate having a thickness of, for example, about 50 µm, and is bonded to the bottom surface of the actuator plate 42, as shown in FIG. 3. The metal substrate used for the nozzle plate 41 is, for example, a stainless steel such as SUS316 and SUS304. As illustrated in FIGS. 3 and 4, the nozzle plate 41 has two rows of nozzles (nozzle rows 411 and 412) extending along the X-axis direction. The nozzle rows 411 and 412 are disposed by being separated from each other in the Y-axis direction by a predetermined distance. That is, the inkjet head 4 of the present embodiment is a two-row inkjet head. A method of manufacture of the nozzle plate 41 as a jet hole plate according to an embodiment of the present disclosure will be described later in detail.

The nozzle row 411 has the plurality of nozzle holes (jet holes) H1 that are disposed in a straight line by being separated from each other in the X-axis direction by a predetermined distance. The nozzle holes H1 penetrate through the nozzle plate 41 in the thickness direction (Z-axis direction), and are in communication with, for example, ejection channels C1e of the actuator plate 42 (described later), as shown in FIG. 5. Specifically, as illustrated in FIG. 4, the nozzle holes H1 are formed in a line, and correspond in position to a central portion of the ejection channels C1e relative to the Y-axis direction. The pitch of the nozzle holes H1 along the X-axis direction is the same as the pitch of the ejection channels C1e along the X-axis direction. The ink 9 supplied through the ejection channels C1e is ejected (jetted) out of the nozzle holes H1 of the nozzle row 411, as will be described later in detail.

As with the case of the nozzle row 411, the nozzle row 412 has the plurality of nozzle holes (jet holes) H2 that are disposed in a straight line by being separated from each other in the X-axis direction by a predetermined distance. The nozzle holes H2 penetrate through the nozzle plate 41 in the thickness direction, and are in communication with, for example, ejection channels C2e of the actuator plate 42 (described later). Specifically, as illustrated in FIG. 4, the nozzle holes H2 are formed in a line, and correspond in position to a central portion of the ejection channels C2e relative to the Y-axis direction. The pitch of the nozzle holes H2 along the X-axis direction is the same as the pitch of the ejection channels C2e along the X-axis direction. The ink 9 supplied through the ejection channels C2e is ejected out of the nozzle holes H2 of the nozzle row 412, as will be described later in detail.

The nozzle plate 41 has the metal substrate having the plurality of nozzle holes H1, and the plurality of nozzle holes H2. The metal substrate has an outlet-side principal surface 410B having outlets Hout for the nozzle holes H1 and H2, and an inlet-side principal surface 410A having inlets Hin, larger than the outlets Hout, provided for the nozzle holes H1 and H2. The nozzle holes H1 and H2 are, for example, tapered through holes formed by tapered hole portions 410C of gradually decreasing diameter toward the bottom. For example, as illustrated in FIG. 7, the nozzle holes H1 and H2 may be through holes formed by the tapered hole portions 410C of gradually decreasing diameter toward the bottom, and cylindrical hole portions 410D continuous from the tapered hole portions 410C.

### Actuator Plate 42

The actuator plate 42 is a plate configured from, for example, a piezoelectric material such as PZT (lead zirconate titanate). The actuator plate 42 is what is generally called a chevron-type actuator, which is formed by laminating two piezoelectric substrates of different polarization directions in the Z direction. The actuator plate 42 may be a cantilever-type actuator formed of a single piezoelectric substrate of a unidirectional polarization direction along the thickness direction (Z-axis direction). As shown in FIGS. 3 and 4, the actuator plate 42 has two rows of channels (channel rows 421 and 422) extending along the X-axis direction. The channel rows 421 and 422 are disposed by being separated from each other in the Y-axis direction by a predetermined distance.

The actuator plate 42 has an ejection region (jet region) A1 for the ink 9, provided at the central portion (the region where the channel rows 421 and 422 are formed) relative to the X-axis direction, as shown in FIG. 4. The actuator plate 42 also has a non-ejection region (non-jet region) A2 for the ink 9, provided at the both end portions (the region where the channel rows 421 and 422 are not formed) relative to the X-axis direction. The non-ejection region A2 is on the outer side of the ejection region A1 relative to the X-axis direction. The regions at the both ends of the actuator plate 42 in the Y-axis direction constitute tail portions 420.

As illustrated in FIGS. 3 and 4, the channel rows 421 have a plurality of channels C1 extending in the Y-axis direction. The channels C1 are disposed side by side, parallel to each other, by being separated from each other in the X-axis direction by a predetermined distance. The channels C1 are defined by drive walls Wd of the piezoelectric body (actuator plate 42), and form grooves of a depressed shape as viewed in a cross section (see FIG. 3).

As with the case of the channel rows 421, the channel rows 422 have a plurality of channels C2 extending in the Y-axis direction. The channels C2 are disposed side by side, parallel to each other, by being separated from each other in the X-axis direction by a predetermined distance. The channels C2 are defined by the drive walls Wd, and form grooves of a depressed shape as viewed in a cross section.

As illustrated in FIGS. 3 and 4, the channels C1 include the ejection channels C1e for ejecting the ink 9, and dummy channels C1d that do not eject the ink 9. In the channel rows 421, the ejection channels C1e and the dummy channels C1d are alternately disposed in the X-axis direction. The ejection channels C1e are in communication with the nozzle holes H1 of the nozzle plate 41, whereas the dummy channels C1d are covered from below by the top surface of the nozzle plate 41, and are not in communication with the nozzle holes H1.

As with the case of the channels C1, the channels C2 include the ejection channels C2e for ejecting the ink 9, and dummy channels C2d that do not eject the ink 9. In the channel rows 422, the ejection channels C2e and the dummy channels C2d are alternately disposed in the X-axis direction. The ejection channels C2e are in communication with the nozzle holes H2 of the nozzle plate 41, whereas the dummy channels C2d are covered from below by the top surface of the nozzle plate 41, and are not in communication with the nozzle holes H2.

As illustrated in FIG. 4, the ejection channels C1e and the dummy channels C1d of the channels C1 are alternately disposed with respect to the ejection channels C2e and the dummy channels C2d of the channels C2. That is, in the inkjet head 4 of the present embodiment, the ejection channels C1e of the channels C1, and the ejection channels C2e of the channels C2 are disposed in a staggered fashion. As illustrated in FIG. 3, shallow grooves Dd that are in communication with the outer end portions of the dummy channels C1d and C2d along the Y-axis direction are formed in portions of the actuator plate 42 corresponding to the dummy channels C1d and C2d.

As illustrated in FIGS. 3 and 5, drive electrodes Ed extending in the Y-axis direction are provided on the opposing inner surfaces of the drive walls Wd. The drive electrodes Ed include common electrodes Edc provided on inner surfaces facing the ejection channels C1e and C2e, and active electrodes Eda provided on inner surfaces facing the dummy channels C1d and C2d. As illustrated in FIG. 5, the drive electrodes Ed (common electrodes Edc and active electrodes Eda) on the inner surfaces of the drive walls Wd have the same depth as the drive walls Wd (the same depth in Z-axis direction). In the actuator plate 42, an insulating film 42A for preventing electrical shorting between the drive electrodes Ed and the nozzle plate 41 is formed on the surface facing the nozzle plate 41. When the actuator plate 42 is the above-described cantilever-type actuator, the drive electrodes Ed (the common electrodes Edc and the active electrodes Eda) are formed about a halfway down the depth (Z-axis direction) of the drive walls Wd on the inner surfaces.

The pair of opposing common electrodes Edc in the same ejection channel C1e (or the same ejection channel C2e) are electrically connected to each other via a common terminal (not illustrated). The pair of opposing active electrodes Eda in the same dummy channel C1d (or the same dummy channel C2d) are electrically isolated from each other. On the other hand, the pair of opposing active electrodes Eda on either side of the same ejection channel C1e (or the same ejection channel C2e) are electrically connected to each other via an active terminal (not illustrated).

As illustrated in FIG. 3, flexible printed boards 44 that electrically connect the drive electrodes Ed to a control section (a control section 40 for the inkjet heads 4; described later) are mounted on the tail portions 420. The wiring patterns (not illustrated) formed on the flexible printed boards 44 are electrically connected to the common terminals and the active terminals. This enables the control section 40 to be described later to apply a drive voltage to each drive electrode Ed via the flexible printed boards 44.

### Cover Plate 43

As illustrated in FIG. 3, the cover plate 43 is disposed so as to close the channels C1 and C2 (the channel rows 421 and 422) of the actuator plate 42. Specifically, the cover plate 43 has a plate-shaped structure bonded to the top surface of the actuator plate 42.

As shown in FIG. 3, the cover plate 43 has a pair of inlet-side common ink chambers 431a and 432a, and a pair of outlet-side common ink chambers 431b and 432b. Specifically, the inlet-side common ink chamber 431a and the outlet-side common ink chamber 431b are formed in regions corresponding to the channel rows 421 (the plurality of channels C1) of the actuator plate 42. The inlet-side common ink chamber 432a and the outlet-side common ink chamber 432b are formed in regions corresponding to the channel rows 422 (the plurality of channels C2) of the actuator plate 42.

The inlet-side common ink chamber 431a has a depressed groove shape, and is formed in the vicinity of the inner end portion of the channels C1 relative to Y-axis direction. A supply slit Sa is formed in a region of the inlet-side common ink chamber 431a corresponding to each ejection channel C1e, through the thickness (Z-axis direction) of the cover plate 43. Similarly, the inlet-side common ink chamber 432a has a depressed groove shape, and is formed in the vicinity of the inner end portion of the channels C2 relative to the Y-axis direction. The supply slit Sa is also formed in a region of the inlet-side common ink chamber 432a corresponding to each ejection channel C2e. The inlet-side common ink chambers 431a and 432a constitute an inlet portion Tin of the inkjet head 4.

As illustrated in FIG. 3, the outlet-side common ink chamber 431b has a depressed groove shape, and is formed in the vicinity of the outer end portion of the channels C1 relative to Y-axis direction. A discharge slit Sb is formed in a region of the outlet-side common ink chamber 431b corresponding to each ejection channel C1e, through the thickness of the cover plate 43. Similarly, the outlet-side common ink chamber 432b has a depressed groove shape, and is formed in the vicinity of the outer end portion of the channels C2 relative to the Y-axis direction. The discharge slit Sb is also formed in a region of the outlet-side common ink chamber 432b corresponding to each ejection channel C2e. The outlet-side common ink chambers 431b and 432b constitute an outlet portion Tout of the inkjet head 4.

That is, the inlet-side common ink chamber 431a and the outlet-side common ink chamber 431b are in communication with the ejection channels C1e via the supply slits Sa and the discharge slits Sb, and are not in communication with the dummy channels C1d. In other words, the dummy channels C1d are closed by the bottom portions of the inlet-side common ink chamber 431a and the outlet-side common ink chamber 431b.

Similarly, the inlet-side common ink chamber 432a and the outlet-side common ink chamber 432b are in communication with the ejection channels C2e via the supply slits Sa and the discharge slits Sb, and are not in communication with the dummy channels C2d. In other words, the dummy channels C2d are closed by the bottom portions of the inlet-side common ink chamber 432a and the outlet-side common ink chamber 432b.

### Control Section 40

As illustrated in FIG. 2, the control section 40 for controlling various operations of the printer 1 is provided in the inkjet head 4 of the present embodiment. The control section 40 controls, for example, the operation of various components, such as the delivery pumps 52a and 52b, in addition to controlling the recording operation of the printer 1 recording an image, texts, and the like (the operation of the inkjet head 4 ejecting the ink 9). The control section 40 is configured from, for example, a microcomputer that includes an arithmetic processing unit, and a memory section including various types of memory.

### Basic Operation of Printer 1

The printer 1 records (prints) an image, texts, and the like on recording paper P in the manner described below. As an initial state, it is assumed here that the four ink tanks 3 (3Y, 3M, 3C, and 3B) shown in FIG. 1 contain inks of corresponding (four) colors in sufficient amounts. Initially, the inkjet heads 4 have been charged with the inks 9 from the ink tanks 3 through the circulation mechanism 5.

In such an initial state, activating the printer 1 rotates the grid rollers 21 of the transport mechanisms 2a and 2b, and transports recording paper P between the grid rollers 21 and the pinch rollers 22 in a transport direction d (X-axis direction). Simultaneously with this transport operation, the drive motor 633 of the drive mechanism 63 rotates the pulleys 631a and 631b to move the endless belt 632. In response, the carriage 62 moves back and forth in the width direction (Y-axis direction) of the recording paper P by being guided by the guide rails 61a and 61b. Here, the inkjet heads 4 (4Y, 4M, 4C, and 4B) appropriately eject the inks 9 of four colors onto the recording paper P to record images, texts, and the like on the recording paper P.

### Detailed Operation of Inkjet Head 4

The operation of the inkjet head 4 (inkjet operation for the ink 9) is described below in detail, with reference to FIGS. 1 to 7. The inkjet head 4 of the present embodiment (a side-shoot, circulatory inkjet head) ejects the ink 9 in shear mode, as follows.

In response to the carriage 62 (see FIG. 1) having started its reciprocal movement, the control section 40 applies a drive voltage to the drive electrodes Ed (common electrodes Edc and active electrodes Eda) of the inkjet head 4 via the flexible printed boards 44. Specifically, the control section 40 applies a drive voltage to the drive electrodes Ed disposed on the pair of drive walls Wd defining the ejection channels C1e and C2e. This causes the pair of drive walls Wd to deform outwardly toward the dummy channels C1d and C2d adjacent to the ejection channels C1e and C2e (see FIG. 5).

That is, the ejection channels C1e and C2e increase their volume as a result of the flexural deformation of the pair of drive walls Wd. The ink 9 stored in the inlet-side common ink chambers 431a and 432a is guided into the ejection channels C1e and C2e as the volume of the ejection channels C1e and C2e increases (see FIG. 3).

The ink 9 guided into the ejection channels C1e and C2e creates a pressure wave, and propagates into the ejection channels C1e and C2e. The drive voltage applied to the drive electrodes Ed becomes 0 (zero) volt at the timing when the pressure wave reaches the nozzle holes H1 and H2 of the nozzle plate 41. In response, the drive walls Wd return to their original shape from the flexurally deformed state, bringing the ejection channels C1e and C2e back to their original volume (see FIG. 5).

The pressure inside the ejection channels C1e and C2e increases, and pressurizes the ink 9 inside the ejection channels C1e and C2e as the volume of the ejection channels C1e and C2e is restored. This causes the ink 9 to be ejected to outside (toward the recording paper P) in the form of droplets through the nozzle holes H1 and H2 (see FIG. 5). The inkjet head 4 ejects (discharges) the ink 9 in this manner, and records images, texts, and the like on the recording paper P. The ink 9 can be ejected in a straight line (good straight-line stability) at high speed because the nozzle holes H1 and H2 of the present embodiment have the tapered hole portions 410C of gradually decreasing diameter toward the bottom (see FIGS. 6 and 7), respectively, as described above. This enables high-quality recording.

### Manufacturing Method of Nozzle Plate 41

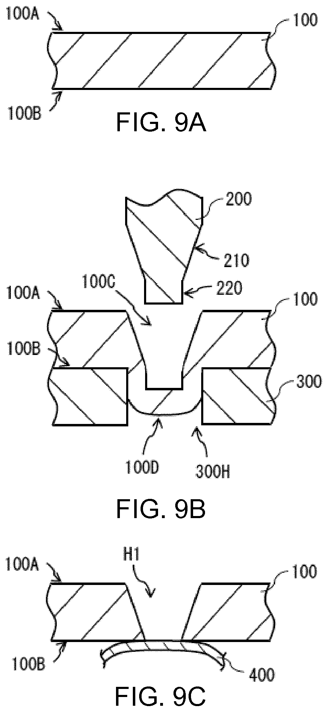

A method for manufacturing the nozzle plate 41 as a jet hole plate according to an embodiment of the present disclosure is described below. FIG. 8 is a diagram representing an exemplary procedure of manufacturing the nozzle plate 41. FIGS. 9A to 9H are cross sectional views representing an example of manufacturing steps of the nozzle plate 41.

First, a metal substrate 100 is prepared (FIG. 9A). The metal substrate 100 is formed of a stainless steel such as SUS316 and SUS304. The metal substrate 100 has a first principal surface 100A on one side, and a second principal surface 100B on the other side. The metal substrate 100 becomes the nozzle plate 41 after working. The first principal surface 100A of the metal substrate 100 is the surface that becomes the inlet-side principal surface 410A of the nozzle plate 41, and the second principal surface 100B of the metal substrate 100 is the surface that becomes the outlet-side principal surface 410B of the nozzle plate 41.

The next step is punching (step S101). First, the metal substrate 100 is fixed on a die 300 with the first principal surface 100A facing up. The die 300 has a plurality of through holes 300H having the same pitch as the nozzle holes H1 of the nozzle plate 41 in X-axis direction. The through hole 300H has a larger diameter than the cylindrical portion 220 of a punch 200 (described later). The first principal surface 100A of the metal substrate 100 is then pressed with one or more punches 200. Specifically, the first principal surface 100A of the metal substrate 100 is pressed with one or more punches 200 in portions facing the through holes 300H. This forms a plurality of indentations 100C in the first principal surface 100A, and, at the same time, raised portions 100D in portions of the second principal surface 100B facing the indentations 100C (FIG. 9B).

The punch 200 has a frustoconical tapered portion 210, and a cylindrical portion 220 formed in contact with an end of the tapered portion 210. The indentation 100C formed under the pressure of the punch 200 therefore has an inverted shape from the shape of the punch 200. Specifically, the indentation 100C has a frustoconical tapered hole portion, and a cylindrical hole portion continuous from the tapered hole portion. The indentation 100C is deeper than the thickness of the metal substrate 100 (the distance between the first principal surface 100A and the second principal surface 100B).

The next step is the first polishing (step S102). Specifically, the raised portions 100D are removed by mechanical polishing to penetrate the metal substrate at the indentations 100C, and form the nozzle holes H1 (FIG. 9C). The mechanical polishing may be performed with, for example, a tape 400 (tape polishing). The tape 400 is, for example, a long polyester film of about 75-µm thick with a plurality of abrasive grains fixed over substantially the whole surface on one side of the film.

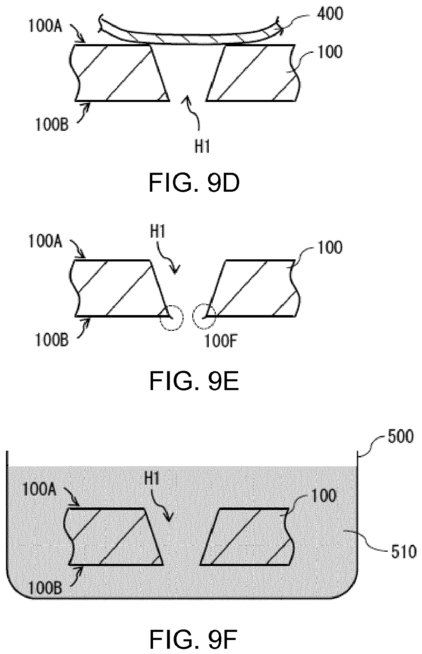

There are cases where the pressure of the punch 200 creates a projection near the inlet end portion (inlet Hin) of the nozzle holes H1. In this case, the first principal surface 100A may be flattened by mechanical polishing when removing the raised portions 100D. This produces the substantially flat first principal surface 100A. Here, the mechanical polishing may be, for example, polishing with the tape 400 (tape polishing), as shown in FIG. 9D.

The mechanical polishing may leave a burr 100F at the ejection end portion (outlet Hout) of the nozzle hole H1, for example, as shown in FIG. 9E. In the present embodiment, second polishing is performed, taking into account such the burr 100F (step S103). Specifically, at least one of the first principal surface 100A and the second principal surface 100B of the metal substrate 100 is polished by chemical polishing, electrolytic polishing, or chemical-mechanical polishing.

### Chemical polishing

Chemical polishing refers to a technique that dissolves a workpiece surface by introducing the workpiece into an acidic solution, or a chemical polishing solution 510 as it is also called. For example, as shown in FIG. 9F, the chemical polishing solution 510 is charged into a vessel 500, and the metal substrate 100 (a workpiece) is dipped in the chemical polishing solution 510 for chemical polishing. The chemical polishing solution 510 may be, for example, U-2413 available from Nippon Hyomen Kagaku Kabushiki Kaisha. When the metal substrate 100 needs to be polished on only one of its principal surfaces (first principal surface 100A or second principal surface 100B), the principal surface (first principal surface 100A or second principal surface 100B) of the metal substrate 100 not in need of polishing may be covered with a coating that is resistant to the chemical polishing solution 510, or may be brought into contact with some type of substrate in advance.

### Electrolytic Polishing

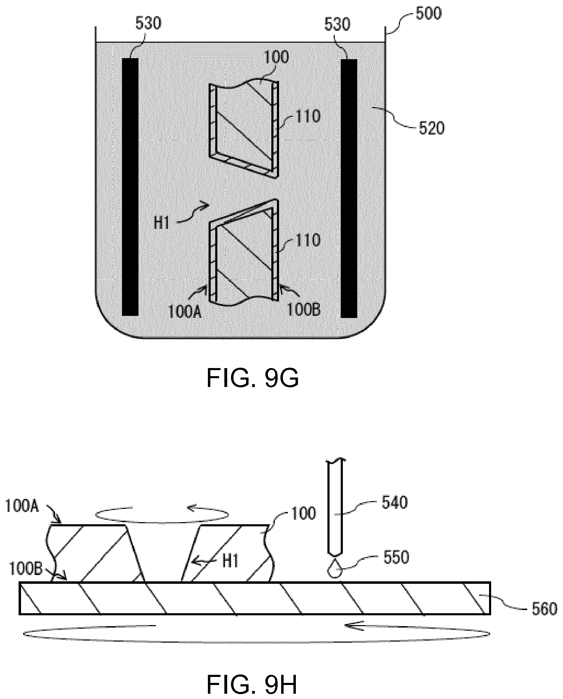

Electrolytic polishing refers to a technique whereby a workpiece and a metal board are dipped in an acidic solution, or an electrolytic polishing solution as it is also called, and a current is passed across the workpiece (anode) and the metal board (cathode) to dissolve atoms such as Fe (iron) and Ni (nickel) atoms into the acidic solution from the workpiece surface facing the cathode, and thereby etch the workpiece surface. For example, as shown in FIG. 9G, an electrolytic polishing solution 520 is charged into the vessel 500, and the metal substrate 100 (workpiece) and a metal board 530 are dipped in the electrolytic polishing solution 520. The metal substrate 100 is then electrolytically polished by passing a current using the metal substrate 100 as anode, and the metal board 530 as cathode. The electrolytic polishing solution 520 may be, for example, 6C016 available from Nippon Hyomen Kagaku Kabushiki Kaisha.

In the electrolytic polishing, an oxide film (passivation film) 110 occurs as the surface of the metal substrate 100 dissolves. Iron (Fe) and chromium (Cr) - main components of stainless steel - dissolve as a result of energization, and chromium immediately binds to oxygen (O), forming the oxide film 110 on a stainless steel surface. The Cr concentration in the oxide film 110 increases as the chromium concentrates on the stainless steel surface in the course of energization. When the metal substrate 100 needs to be polished on only one of its principal surfaces (first principal surface 100A or second principal surface 100B), for example, the metal board 530 may be installed only on the side facing the principal surface that needs to be polished, without disposing the metal board 530 on the side facing the principal surface (first principal surface 100A or second principal surface 100B) of the metal substrate 100 not in need of polishing.

### Chemical-Mechanical Polishing

Chemical-mechanical polishing refers to a technique that quickly produces a smooth polished surface by enhancing the mechanical polishing (surface removal) effect due to relative movement of a polisher (abrasive grains) and a workpiece, using the surface chemistry of the polisher (abrasive grains) itself, or the effect of the chemical components contained in the polishing solution. As an example of chemical-mechanical polishing, a polishing solution 550 containing a polisher is ejected onto a polishing pad 560 from an ejector 540, and the polishing pad 560 is rotated with the metal substrate 100 (workpiece), as shown in FIG. 9H. For example, the metal substrate 100 is subjected to chemical-mechanical polishing by placing it on the polishing pad 560 with the first principal surface 100A facing up. After being polished, the metal substrate 100 is flipped, and subjected to chemical-mechanical polishing on the polishing pad 560 with the second principal surface 100B facing up.

In the chemical-mechanical polishing, the surface chemistry of the polisher (abrasive grains) itself contained in the polishing solution 550, or the effect of the chemical components contained in the polishing solution 550 accelerates the mechanical polishing (surface removal) of the surface of the metal substrate 100 due to relative movement of the polishing solution 550 and the metal substrate 100(workpiece), and smoothes the surface of the metal substrate 100. When the metal substrate 100 needs to be polished on only one of its principal surfaces (first principal surface 100A or second principal surface 100B), the metal substrate 100 may be subjected to chemical-mechanical polishing by contacting the metal substrate 100 to the polishing pad 560 only on the principal surface (first principal surface 100A or second principal surface 100B) in need of polishing.

In the second polishing step (step S103), the inner walls of the nozzle holes H1 also may be polished by chemical polishing, electrolytic polishing, or chemical-mechanical polishing, in addition to the first principal surface 100A and the second principal surface 100B. The chemical polishing solution 510 also contacts the inner walls of the nozzle holes H1, for example, when the chemical polishing is performed in the manner represented in FIG. 9F. In this way, the chemical polishing can also polish the inner walls of the nozzle holes H1, in addition to the first principal surface 100A and the second principal surface 100B. The electrolytic polishing solution 520 contacts the inner walls of the nozzle holes H1, for example, when the electrolytic polishing is performed in the manner represented in FIG. 9G. In this way, the electrolytic polishing can also polish the inner walls of the nozzle holes H1, in addition to the first principal surface 100A and the second principal surface 100B. The polishing solution 550 contacts the inner walls of the nozzle holes H1, for example, when the chemical-mechanical polishing is performed in the manner represented in FIG. 9H. In this way, the chemical-mechanical polishing can also polish the inner walls of the nozzle holes H1, in addition to the first principal surface 100A and the second principal surface 100B. This completes the nozzle plate 41.

### Advantages

The following describes advantages of the nozzle plate 41 as a jet hole plate according to an embodiment of the present disclosure.

Printers equipped with inkjet heads are used in a wide range of applications. An inkjet head includes a plurality of laminated plates including a nozzle plate having formed therein large numbers of nozzle holes, and is configured to eject liquid, specifically, ink, against a target recording medium through the nozzle holes. Such a nozzle plate is formed by, for example, press working of a metal substrate. High durability is generally desired for such a nozzle plate.

A burr may occur in the nozzle holes when the formation of the nozzle holes involves only mechanical polishing of the raised portions after press working. This may cause deflection of airborne droplets, and impair print quality. When the raised portions are removed solely by electrolytic polishing after press working, a sag may occur in the nozzle holes, and ejection stability may deteriorate. When the nozzle holes are formed by press working with a punch, the inner walls of the nozzle holes may have irregularities that depend on the surface roughness of the punch, and this may produce missing nozzles (nozzles failing to eject droplets) due to adhesion of bubbles. Missing nozzles lead to poor ejection stability, and poor ink chargeability, and may necessitate a high ejection voltage against the increased liquid resistance. When the press working with a punch creates a projection on the first principal surface 100A side, the projection, if left unremoved, may cause weak adhesion between the nozzle plate and the actuator plate, and impair head durability. There is also a possibility of the projection breaking the insulating film 42A of the actuator plate, and causing current leak between the drive electrodes Ed and the nozzle plate 41, or electrical shorting between the drive electrodes Ed and the nozzle plate 41. The adhesion between the nozzle plate and the actuator plate may weaken, and the head durability may decrease when the surface composition is non-homogenous on the first principal surface 100A side, even when the projection is absent on the first principal surface 100A side. In the event where surface corrosion has occurred on the nozzle plate, the surface corrosion may cause abnormal ejection, or detachment of the nozzle plate from the actuator plate. The type of usable ink also may be limited, depending on the material of the nozzle plate.

In the nozzle plate 41 according to the present embodiment, the nozzle holes H1 are formed through the metal substrate 100 by mechanical polishing that removes the raised portions 100D formed by punching so as to penetrate the metal substrate 100 at the indentations 100C formed by punching. At least one of the first principal surface 100A and the second principal surface 100B of the metal substrate 100 is then polished by chemical polishing, electrolytic polishing, or chemical-mechanical polishing.

The chemical polishing, the electrolytic polishing, or the chemical-mechanical polishing reduces or eliminates, for example, the burr and other projections created at the outlets Hout of the nozzle holes H1 in the first mechanical polishing. This improves the straight-line stability of the jetted droplets, and stable ejection is possible. Sagging is also less likely to occur in the nozzle holes H1 as compared to when, for example, the first mechanical polishing is skipped, and the raised portions 100D are polished by chemical polishing, electrolytic polishing, or chemical-mechanical polishing. This ensures ejection stability. The surface composition of the first principal surface 100A becomes more homogenous when, for example, the first principal surface 100A and the second principal surface 100B are both subjected to chemical polishing, electrolytic polishing, or chemical-mechanical polishing, as compared to when the raised portions 100D are polished solely by the first mechanical polishing. In this way, the actuator plate 42 that controls supply of ink to the nozzle holes H1 can have improved adhesion for the first principal surface 100A. This makes it possible to prevent decrease of head durability due to insufficient adhesion for the nozzle plate 41.

In the nozzle plate 41 according to the present embodiment, the inner walls of the nozzle holes H1 are also polished by chemical polishing, electrolytic polishing, or chemical-mechanical polishing in the second polishing step (step S103), in addition to the first principal surface 100A and the second principal surface 100B. The chemical polishing, the electrolytic polishing, or the chemical-mechanical polishing reduces or eliminates the surface roughness created on the inner walls of the nozzle holes H1 by punching in the first step. This reduces the missing nozzles (nozzles failing to eject droplets) due to adhering bubbles, and stable ejection is possible. Ink chargeability also improves. With the reduced liquid resistance, ink can be ejected at low voltage.

The nozzle plate 41 according to the present embodiment uses the metal substrate 100 formed of a stainless steel. Because of this, the Cr concentration in the surface of the metal substrate 100 can increase after chemical polishing, electrolytic polishing, or chemical-mechanical polishing, and surface corrosion can be reduced in the metal substrate 100. This reduces abnormal ejection, and detachment of the metal substrate due to surface corrosion, and the ejection stability and the head durability improve. There is also no limitation in the type of ink that can be used, making the head more versatile.

In the nozzle plate 41 according to the present embodiment, when in the first polishing step (step S102) the first principal surface 100A is further flattend by the mechanical polishing, in addition to removing the raised portion 100D, the actuator plate 42 that controls supply of ink to the nozzle holes H1 can be prevented from having poor adhesion to the first principal surface 100A due to, for example, a projection created on the first principal surface 100A by the punch 200. In this way, the head can remain durable. With no projection on the first principal surface 100A, there is also no possibility of breakage of the insulating film 42A, and the insulation will not be lost, for example. There accordingly will be no current leak between the drive electrodes Ed and the nozzle plate 41, and no electrical shorting between the drive electrodes Ed and the nozzle plate 41.

### 2. Variations

While the present disclosure has been described through an embodiment, the present disclosure is not limited to the embodiment above, and may be modified in a variety of ways.

While the foregoing exemplary embodiment described exemplary structures (e.g., shapes, positions, and numbers) of different members of the printer 1 and the inkjet head 4, the structures of these and other members are not limited to the ones described in the foregoing embodiment, and these may have other structures, including shapes, positions, and numbers. The values and ranges of various parameters, and the relationships between these parameters described in the foregoing embodiment are also not limited to the ones described in the foregoing embodiment, and the parameters may have different values, ranges and relationships.

Specifically, for example, the foregoing embodiment described the two-row inkjet head 4 (with two rows of nozzles 411 and 412). However, the present disclosure is not limited to this example. Specifically, for example, the inkjet head may be a single-row inkjet head (with a single row of nozzles), or an inkjet head having three or more rows (with three or more rows of nozzles).

For example, the foregoing embodiment described the nozzle rows 411 and 412 extending in a straight line along the X-axis direction. However, the present disclosure is not limited to this example. For example, the nozzle rows 411 and 412 may extend in an oblique direction. The shape of the nozzle holes H1 and H2 is also not limited to the circular shape described in the foregoing embodiment, and may be, for example, a polygonal shape such as a triangle, or an elliptical or a star shape.

For example, the foregoing embodiment described the inkjet head 4 of a side shoot-type. However, the present disclosure is not limited to this example. For example, the inkjet head 4 may be of a different type. For example, the foregoing embodiment described the inkjet head 4 as a circulatory inkjet head. However, the present disclosure is not limited to this example. For example, the inkjet head 4 may be a non-circulatory inkjet head.

For example, in the foregoing embodiment and variations, the die 300 may have the single through hole 300H when the single punch 200 is used for punching. Here, the single punch 200 and the single through hole 300H work as a pair, and can form the plurality of raised portions 100D in a line by moving relative to the metal substrate 100.

For example, in the foregoing embodiment and variations, the nozzle plate 41 may have only one nozzle hole H1. For example, in the foregoing embodiment and variations, the nozzle plate 41 may have only one nozzle hole H2. For example, in the foregoing embodiment and variations, the nozzle plate 41 may have only one type of nozzle hole, H1 or H2. The nozzle plate 41 may have only a single hole for ejection of the ink 9.

The series of processes described in the foregoing embodiment may be performed on hardware (circuit) or software (program). In the case of software, the software is configured as a set of programs that causes a computer to execute various functions. The program may be, for example, a preinstalled program in the computer, and may be installed afterwards in the computer from a network or a recording medium.

The foregoing embodiment described the printer 1 (inkjet printer) as a specific example of a liquid jet recording apparatus of the present disclosure. However, the present disclosure is not limited to this example, and may be applied to devices and apparatuses other than inkjet printers. In other words, a liquid jet head (inkjet head 4) and a jet hole plate (nozzle plate 41) of the present disclosure may be applied to devices and apparatuses other than inkjet printers. Specifically, for example, a liquid jet head and a jet hole plate of the present disclosure may be applied to devices such as facsimile machines, and on-demand printers.

The foregoing embodiment and variations described recording paper P as a target of recording by the printer 1. However, the recording target of a liquid jet recording apparatus of the present disclosure is not limited to this example. For example, texts and patterns can be formed by jetting ink onto various materials such as a boxboard, a fabric, a plastic, and a metal. The recording target is not necessarily required to have a flat surface shape, and a liquid jet recording apparatus of the present disclosure can be used for painting and decoration of various solid objects, including, for example, food products, building materials such as tiles, furniture, and automobiles. A liquid jet recording apparatus of the present disclosure also can print on fibers, or create a solid object by jetting and solidifying ink (i.e., a 3D printer).

The examples described above may be applied in any combinations.

The effects described in the specification are merely illustrative and are not restrictive, and may include other effects.

Further, the present disclosure can also take the following configurations.
<1> A method for manufacturing a jet hole plate,
   the method comprising:
   a punching step of pressing a first principal surface of a metal substrate with a punch to form an indentation in the first principal surface, and to form a raised portion in a second principal surface of the metal substrate at a position opposite to the indentation;
   a first polishing step of removing the raised portion by mechanical polishing to penetrate the metal substrate at the indentation to thereby form a jet hole; and
   a second polishing step of polishing at least one of the first principal surface and the second principal surface of the metal substrate by chemical polishing, electrolytic polishing, or chemical-mechanical polishing.
<2> The method according to <1>, wherein in the second polishing step, in addition to the first principal surface and/or the second principal surface, an inner wall of the jet hole is polished by the chemical polishing, the electrolytic polishing, or the chemical-mechanical polishing.
<3> The method according to <1> or <2>, wherein the metal substrate is formed of a stainless steel.
<4> The method according to any one of <1> to <3>, wherein, in the first polishing step, in addition to removing the raised portion, the first principal surface is flattened by the mechanical polishing.

## Claims

1. A method for manufacturing a jet hole plate (41),
the method comprising:
a punching step (S101) of pressing a first principal surface (100A) of a metal substrate (100) with a punch (200) to form an indentation (100C) in the first principal surface, and to form a raised portion (100D) in a second principal surface (100B) of the metal substrate at a position opposite to the indentation;
a first polishing step (S102) of removing the raised portion by mechanical polishing to penetrate the metal substrate at the indentation to thereby form a jet hole (H1, H2); and
a second polishing step (S103) of polishing at least one of the first principal surface and the second principal surface of the metal substrate by chemical polishing, electrolytic polishing, or chemical-mechanical polishing.

2. The method according to claim 1, wherein in the second polishing step, in addition to the first principal surface and/or the second principal surface, an inner wall (410C) of the jet hole is polished by the chemical polishing, the electrolytic polishing, or the chemical-mechanical polishing.

3. The method according to claim 1 or 2, wherein the metal substrate is formed of a stainless steel.

4. The method according to any one of claims 1 to 3, wherein, in the first polishing step, in addition to removing the raised portion, the first principal surface is flattened by the mechanical polishing.
